# EUROPEAN PATENT APPLICATION

(11) **EP 1 339 011 A1**
(43) Date of publication of application: **27.08.2003**
(21) Application number: 02003479.9
(22) Date of filing: 14.02.2002
(51) Int. Cl.: G06K 11/08, G06K 11/18, G06F 3/033

(54) **Optical mouse for a personal computer**

(71) Applicant: Unity Opto Technology Co., Ltd., San Chung City, Taipei Hsien, Taiwan (TW)
(72) Inventor: Chin, Yuan-Cheng, Hsintien City, Taipei Hsien (TW)
(74) Representative: Winkler, Andreas, Dr.

(57) **Abstract**

An optical mouse has a light emitting diode (LED) and a projecting lens located on a reflection path of the LED so as to project the light of the LED to the sensor. After the sensor picks up the signal from the LED, the signal is readily sent to the computer so as to simplify the structure and reduce the manufacturing cost of the optical mouse.

## Description

### BACKGROUND OF THE INVENTION

### 1. Field of the Invention

The present invention relates to an optical mouse, and more particularly to an optical mouse for a personal computer. The optical mouse has a light emitting diode (LED) and a projecting lens located on a reflective path of the LED so as to project the light of the LED to the sensor to simplify the structure and reduce the manufacturing cost of the optical mouse.

### 2. Description of Related Art

Normally, a computer mouse includes a housing composed of a top cover and a base. The base has a hole and a circuit board mounted on the base and having a tracking moduler corresponding to the hole and a wire connected to the host of the computer. The tracking moduler has a tracking ball. With such an arrangement, the movement of the tracking ball is able to be transformed into digital signal and sent to the host of the computer so as to accomplish the purpose of signal transmission. However, this kind of computer mouse needs to be connected to the host by means of the wire and to move on a reflection surface (table). Therefore, the movement of the computer mouse is limited by the length of the wire and also the space available on the reflection surface. Furthermore, due to a long period of time rolling on the reflection surface, the tracking ball is easily contaminated by the dust on the reflection surface and thus causes malfunction to the tracking moduler.

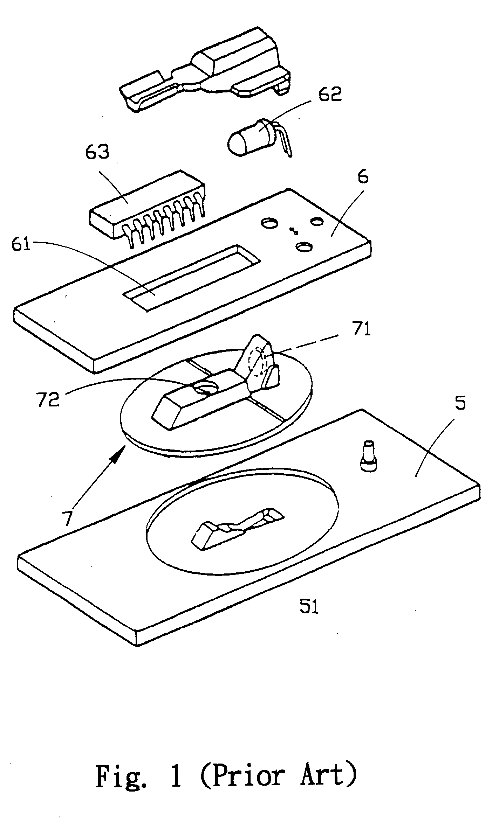

In order to overcome the shortcoming, another optical mouse is invented. With reference to Fig. 1, the conventional mouse includes a base 5, a top cover (not shown) and a circuit board 6. The circuit board 6 is securely mounted on the base 5. The circuit board 6 and the base 5 are respectively defined with a central hole 51,61. The circuit board 6 has a light emitting diode 62 located adjacent to the central hole 61 and a sensor 63 whose receiver (not numbered) corresponds to the central hole 61. A lens set 7 is located between the base 5 and the circuit board 6 and has a first lens 71 corresponding to the light emitting diode (LED) 62 and a second lens 72 integrally formed with and orthogonal to the first lens 71. The second lens 72 corresponds to the sensor 63. Therefore, the light from the LED 62 is able to be reflected to the table surface by means of the first lens 71 and the signal generated by the chosen icon selected by the button on the mouse is able to be transmitted to the second lens 72 and then to the sensor 63. Although this kind of optical mouse effectively solves the drawback of conventional mouse, the signal from the LED 62 has to pass through the first lens 71, the table surface, the second lens 72 and reach the sensor 63, which increase the complexity of the mouse structure and therefore cost.

To overcome the shortcomings, the present invention intends to provide an improved optical mouse to mitigate or obviate the aforementioned problems.

### SUMMARY OF THE INVENTION

The primary objective of the invention is to provide an optical mouse for a personal computer. The optical mouse has a light emitting diode (LED) and a projecting lens located on a reflection path of the LED so as to project the light of the LED to the sensor to simplify the structure and reduce the manufacturing cost of the optical mouse.

Other objects, advantages and novel features of the invention will become more apparent from the following detailed description when taken in conjunction with the accompanying drawings.

### BRIEF DESCRIPTION OF THE DRAWINGS

Fig. 1 is an exploded perspective view of a conventional optical mouse;
Fig. 2 is an exploded perspective view of the optical mouse of the present invention;
Fig. 3 is a side plan view of the assembled optical mouse in partial section;
Fig. 4 is a schematic view showing the light reflection path of the optical mouse of the present invention.

### DETAILED DESCRIPTION OF PREFERRED EMBODIMENT

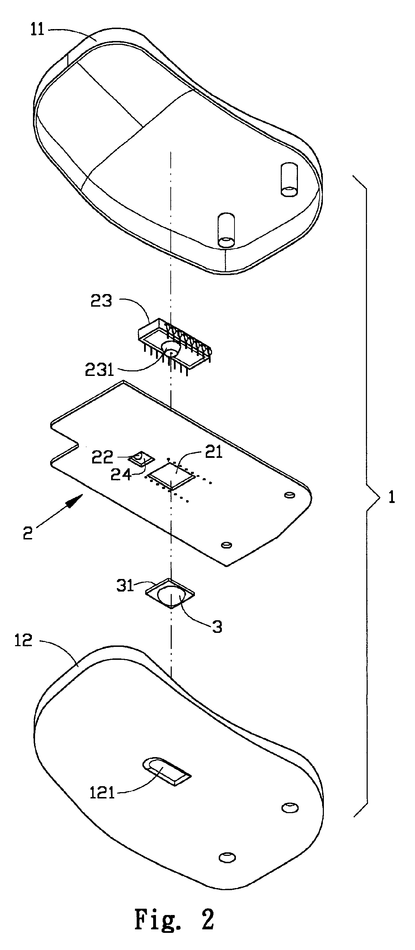

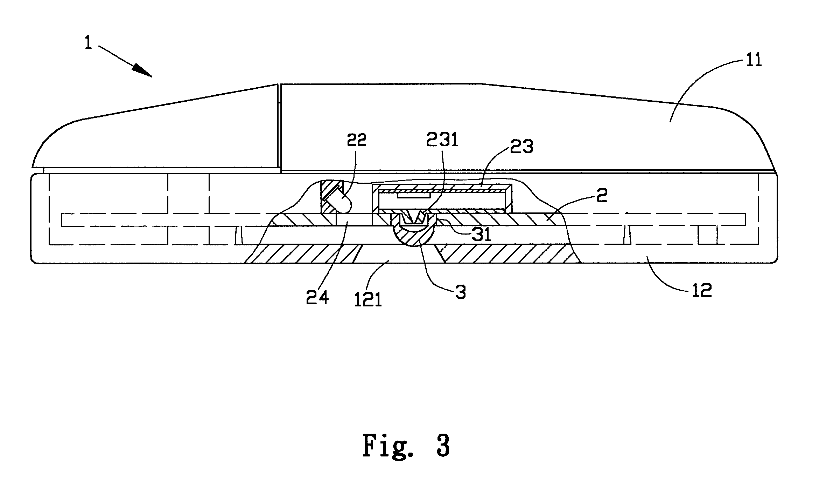

With reference to Figs. 2 and 3, the optical mouse in accordance with the present invention has a housing 1, a circuit board 2 and a projecting lens 3.

The housing 1 is composed of a top cover 11 and a base 12, wherein the base 12 has a through hole 121 defined in a predetermined location on the base 12.

The circuit board 2 is securely mounted on the base 12 and has a hole 21 defmed to correspond to the through hole 121 of the base 12, a LED 22 mounted on top of the circuit board 2 and a sensor 23 with a receptive portion 231 corresponding to the LED 22, the through hole 121 and the hole 21. Furthermore, the receptive portion 231 is located on top of the hole 21. An opening 24 is defined in the circuit board 2 to correspond to a light path of the LED 22.

The projecting lens 3 inside the housing 1 and is located outside of the receptive portion 231 of the sensor 23. The projecting lens 3 is located in an imaginary axis with the receptive portion 231 of the sensor 23 and has a securing portion 31 so as to be secured in the hole 21 of the circuit board 2. Thus, the projecting lens 3 is able to be located on the light path of the LED 22 and the signal from the LED 22 is able to be picked up by the receptive portion 231 of the sensor 23.

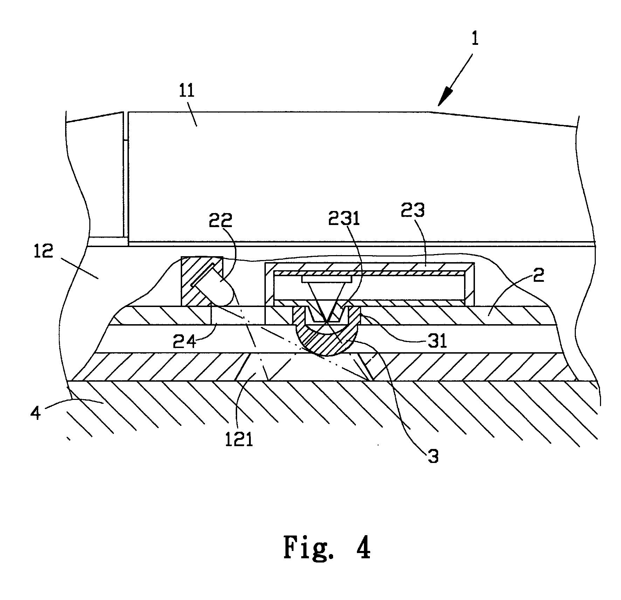

With reference to Figs. 3 and 4, because the connection between the optical mouse and the host of the personal computer is conventional, thus the omission of the detailed description of the connection between the optical mouse and the hose of the personal computer will not cause any enablement problem.

When the invention is in use, the optical mouse is first placed on a table face 4. The signal from the LED 22 continuously projects from the opening 24 of the circuit board 2 to the table face 4. The signal is then reflected by the table face 4 to the projecting lens 3 and then to the receptive portion 231 of the sensor 23. Therefore, the signal of the LED 22 is able to be transmitted to the sensor 23 by means of the projecting lens 3 easily.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. An optical mouse for a personal computer, the optical mouse comprising:
a housing composed of a top cover and a base which provides with a through hole;
a circuit board securely mounted inside the housing and having a light emitting diode and a sensor with a receptive portion, wherein the receptive portion corresponds to the through hole of the base and the light emitting diode corresponds to a place where the receptive portion of the sensor is located;
a projecting lens securely received in the housing and located outside the receptive portion of the sensor, wherein the projecting lens is located on an imaginary axis with the receptive portion of the sensor,
whereby due to the location of the projecting lens being on a reflection path of the light emitting diode, the signal from the light emitting diode is able to be reflected by a table surface and then picked by the projecting lens.

2. The optical mouse as claimed in claim 1, wherein the circuit board has a hole defined to correspond to the through hole in the base and the projecting lens is located in the hole.

3. The optical lens as claimed in claim 2, wherein the light emitting diode is mounted on top of the circuit board and the circuit board has an opening corresponding to the reflection path of the light emitting diode.

4. The optical lens as claimed in claim 2, wherein the projecting lens has a securing portion so as to be secured in the hole of the circuit board.
